# DEMANDE DE BREVET EUROPEEN

(11) **EP 1 880 824 A1**
(43) Date de publication de la demande: **23.01.2008**
(21) Numéro de dépôt: 06117557.6
(22) Date de dépôt: 20.07.2006
(51) Int. Cl.: B29C 49/02, B29B 11/04, B29C 49/22, B29C 49/06, B29C 49/04, B29C 51/00

(54) **Préforme pour la confection d'un emballage par soufflage, méthode de soufflage de la préforme et emballage ainsi obtenu**

(71) Demandeur: Aisapack Holding SA, 1896 Vouvry (CH)
(72) Inventeur: Thomasset, Jacques, 1896 Vouvry (CH); Roy, Hugues-Vincent, 1896 Vouvry (CH); Pellissier, Joachim, 1896 Vouvry (CH)
(74) Mandataire: Grosfillier, Philippe

(57) **Abrégé**

L'invention concerne une préforme (1) pour la confection d'un emballage par soufflage caractérisé par le fait qu'elle est au moins composée de trois éléments distincts assemblés l'un à l'autre à savoir une paroi latérale (3), un fond (4), et une partie supérieure (2) comprenant une ouverture.
L'invention concerne également une méthode de soufflage d'une préforme (1) ainsi qu'un emballage obtenu par soufflage de ladite préforme (1).

## Description

### Domaine de l'invention

La présente invention se situe dans le domaine des récipients en matière plastique réalisés par soufflage dans un moule d'une préforme. L'invention concerne une préforme et son mode de réalisation pour réalisation de récipients par étirage soufflage dans un moule. Elle concerne également les emballages obtenus par soufflage de telles préformes. L'invention permet d'utiliser une grande variété de résines et permet l'obtention de récipients à paroi très fine.

La présente invention est particulièrement destinée, mais pas de façon exclusive, aux utilisations suivantes :
- Conditionnement de boissons alimentaires telles que jus de fruits, boissons vitaminées, lait, thé froid, etc.
- Conditionnement de produits visqueux tels que dentifrice, crèmes de soins corporels, onctions pharmaceutiques, produits alimentaires (mayonnaise, ketchup, moutarde), etc.
- Conditionnement de produits techniques tels que silicone ou mastic.

### Etat de la technique

Dans l'industrie des emballages plastiques réalisés par soufflage d'une préforme, il est conventionnel de mouler par injection une préforme, ladite préforme comprenant un goulot, une paroi latérale et un fond. Cette préforme présente de nombreux avantages : elle peut être monocouche ou multicouche, elles peut être fabriquée à grande cadence dans un moule multi-empreintes, elle permet une grande diversité de géométrie d'emballage.

Le récipient obtenu par soufflage de ladite préforme comprend trois parties distinctes, à savoir une partie supérieure comprenant un goulot, un fond sur lequel repose le récipient, et des parois latérales reliant le goulot au fond. Le goulot permet la fonction d'ouverture - fermeture du récipient tout en garantissant l'étanchéité. Le goulot contient généralement des moyens de manipulation de la préforme ou du récipient soufflé, lesdits moyens étant utilisés lors du soufflage de la préforme, ainsi que lors du remplissage du récipient. Les différentes fonctions du goulot, comme l'étanchéité, l'ouverture fermeture, nécessitent une grande précision de sa géométrie.

Les techniques actuelles de moulage ne permettent pas l'obtention conjointe de parois latérales de fine épaisseur et les propriétés précitées au niveau du goulot. Cette difficulté est liée aux limites du procédé d'injection et à la difficulté de mouler des parois latérales de fine épaisseur tout en obtenant une grande précision au niveau du goulot. Lors du procédé de fabrication des préformes, la résine thermoplastique injectée dans la cavité du moule remplit progressivement le fond, les parois latérales et en fin d'écoulement le goulot. Il est difficile d'obtenir un goulot très précis si l'épaisseur de la paroi latérale est inférieure à celle du goulot car la résine injectée se refroidit plus rapidement au niveau des parois latérales et empêche un remplissage suffisant du goulot. Il apparaît donc clairement des limites quant à l'épaisseur des parois latérales, celles-ci ne pouvant être largement inférieures à celles du goulot.

La demande de brevet W02005/066027 propose de remédier au problème précité grâce à une préforme formée de l'assemblage de deux parties, la première partie étant le goulot et la deuxième partie étant la cavité formée par la paroi latérale et le fond. Selon la demande de brevet W02005/066027, les deux parties de la préformes sont fabriquées indépendamment par injection moulage. Un avantage de la demande précitée réside dans la possibilité de réaliser des emballages à paroi fine et remplis à haute température. La réalisation d'une préforme ayant une paroi latérale de faible épaisseur permet d'éviter de sévères retraits et déformations de l'emballage lors du remplissage à chaud.

La demande de brevet W02005/066027 permet une plus grande variété de récipients soufflés grâce à la fabrication de préforme en deux parties ; cependant cette demande de brevet ne résout pas les problèmes liés au fond du récipient. Il est connu par l'homme du métier que le fond du récipient est souvent la partie la plus fragile de l'emballage. Cette fragilité se manifeste par la rupture du fond lors d'une chute du récipient, par la faible résistance de cette partie du récipient lors d'une action conjuguée de contraintes physiques et chimiques (stress cracking).

Du fait de la géométrie des préformes actuelles, il n'est pas possible de réaliser par soufflage des récipients avec une grande variété de résine de résine comme les polyoléfines (PE, PP), les polyamides (PA6), les résines barrières (EVOH, PAMXD6, PVDC). L'art antérieur ne permet pas de réaliser des récipients soufflés comprenant plus de trois résines en structure multicouches. Pour des raisons à la fois techniques et économiques, il peut être intéressant d'avoir un nombre de couche plus élevé dans l'emballage.

### Exposé général de l'invention

L'invention permet de remédier aux problèmes précités ; elle permet en particulier d'obtenir par soufflage d'une préforme des récipients à parois latérales très fines avec une grande diversité de résine. L'invention permet d'obtenir des emballages de fine épaisseur avec un grand nombre de couches, et permet une grande combinaison de structures multicouches.

L'invention consiste à réaliser une préforme en au moins trois parties, la première partie formant le goulot, la deuxième partie formant les parois latérales et la dernière partie formant le fond ; les trois parties étant assemblées afin de former ladite préforme.

### Exposé détaillé de l'invention

L'invention est décrite plus en détail ci-après au moyen d'exemples illustrés par les figures suivantes :
Les figures 1 et 2 illustrent une préforme en trois partie décrivant le concept inventif. Ces préformes comportent trois parties fabriquées séparément, à savoir un goulot, un fond et des parois latérales.
Les figures 3 et 4 montrent des géométries de préformes correspondant à l'invention.
La figure 5 montre une préforme selon l'invention et la figue 6 illustre le récipient soufflé obtenu à partir de la préforme illustré figure 5.
Les figures 7 et 8 correspondent à un mode préférentiel de l'invention. La figure 7 montre la préforme correspondant au mode préférentiel, et la figure 8 illustre le récipient obtenu après soufflage.
La figure 9 montre un exemple d'assemblage par emboîtement du goulot et des parois latérales.

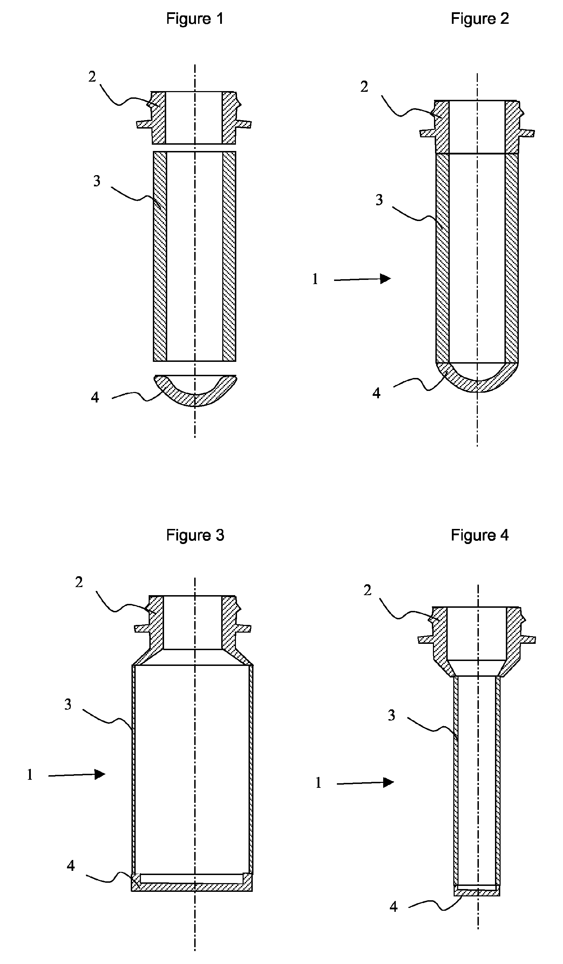

La figure 1 illustre la réalisation de la préforme en plusieurs parties ; à savoir un goulot 2, des parois latérales 3, et un fond 4. Le goulot 2 est généralement moulé par injection ou compression afin d'obtenir une grande précision de cette partie de la préforme. Les parois latérales 3 peuvent être moulées par injection ou compression, ou extrudée sous forme tubulaire, ou encore façonnées à partir d'une feuille soudée. Le fond 4 peut être moulé par injection ou compression ou fabriqué par thermoformage.

La figure 2 montre la préforme 1 obtenue par assemblage du goulot 2, des parois latérales 3 et du fond 4. L'assemblage peut être fait par soudage, par emboîtement mécanique des différentes parties ou par collage. La fabrication de préformes en trois parties distinctes présente de nombreux avantages ; elle permet une grande liberté au niveau des géométries respectives desdites parties ; elle permet la réalisation desdites parties avec une grande variété de résines ; elle permet l'association de résines différentes pour le goulot, le fond et les parois latérales ; enfin elle permet la réalisation de préformes multicouches.

La figure 3 montre une géométrie de préforme obtenue par assemblage. Cette préforme comporte un goulot 2, des parois latérales 3 et un fond 4. Le diamètre intérieur des parois latérales est supérieur au diamètre du goulot, ce qui rend impossible la réalisation de cette préforme par moulage par injection ou compression.

La figure 4 illustre une autre géométrie de préforme dont ayant des parois latérales 3 de faible épaisseur par rapport au goulot.

Les figures 3 et 4 illustrent un grand avantage de l'invention qui permet la réalisation de préformes à parois latérales d'épaisseur fine par rapport au goulot ou au fond. Ces préformes à paroi fines permettent l'obtention d'emballages soufflés aux propriétés avantageuses.

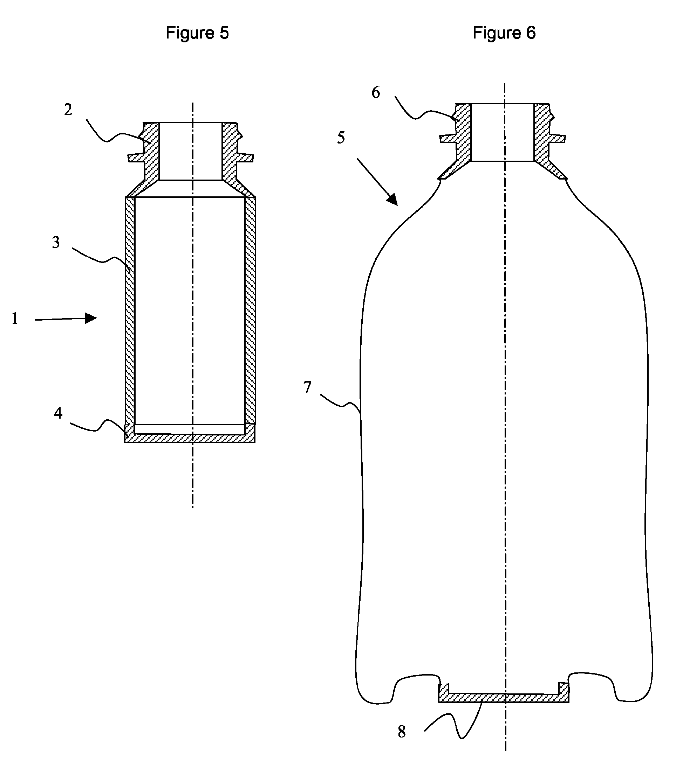

La figure 5 illustre une préforme 1 en trois parties réalisée selon l'invention, et le récipient 5 obtenu par soufflage dans un moule de ladite préforme est illustré figure 6. Ce récipient 5 comprend un goulot 6, des parois latérales 7 et un fond 8. Lors du soufflage de la préforme 1 pour obtenir le récipient 5, seule les parois latérales 3 de la préforme sont déformées. Le goulot 6 du récipient 5 est identique au goulot 2 de la préforme 1, et le fond 8 du récipient 5 est identique au fond 4 de la préforme 1. Le récipient 5 présente de nombreux avantages. L'épaisseur de ses parois latérales 7 est très fine par rapport à l'épaisseur du goulot 6 et du fond 8. Le goulot 6 présente une grande précision et permet les fonctions d'ouverture fermeture du récipient et garantit une bonne étanchéité. Le fond 8 peut être réalisé avec une grande variété de forme et d'épaisseur, et avec un grand choix de résines. Il permet d'utiliser des pressions élevées dans le récipient, et présente une résistance améliorée au stress cracking. Les parois latérales du récipient peuvent être de très fine épaisseur. Les parois latérales peuvent être multicouches, ce qui permet l'utilisation du récipient dans des domaines où des propriétés barrières sont requises. A titre d'exemple, les parois latérales du récipient peuvent contenir une couche d'EVOH comme barrière à l'oxygène, une couche de PET qui permet le soufflage de la préforme, une couche de PE ou PP qui permet de souder les parois latérales sur le goulot et le fond, et des couches de résines adhésives qui assurent la cohésion de la structure multicouche.

L'invention est particulièrement avantageuse pour réaliser des récipients à parois latérales très fines.

L'invention est particulièrement avantageuse pour réaliser des récipients soufflés présentant des propriétés barrières élevées, lesdits récipients permettant la conservation de produits sensibles.

L'invention est particulièrement avantageuse pour réaliser des récipients pouvant être remplis à haute température, ladite température de remplissage étant supérieure à 80°C.

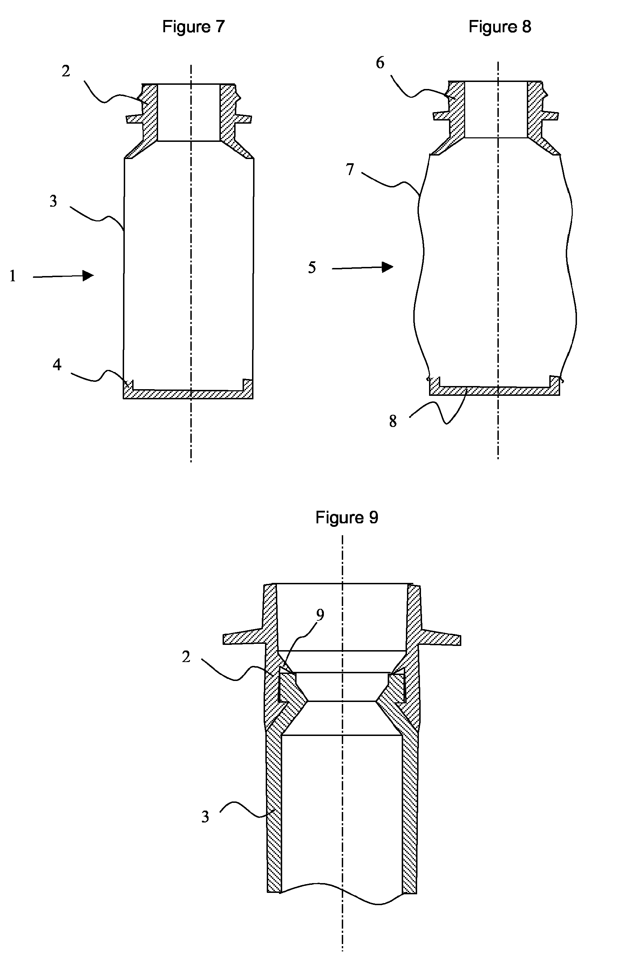

Les figures 7 et 8 illustrent un mode préférentiel de l'invention. La préforme correspondant au mode préférentiel est illustrée figure 7. Cette préforme 1 comporte un goulot 2, un fond 4 et des parois latérales de fine épaisseur 3 reliées au fond et au goulot. Les parois latérales 3 de la préforme ont une épaisseur inférieure à 500 microns et sont fabriquées par extrusion. Les parois latérales sont soudées sur le fond et le goulot.

Le mode préférentiel de l'invention permet la réalisation de récipients à paroi latérales d'épaisseur inférieure à 0,3 mm et ayant un taux d'étirage inférieur à 5. Dans le cas de parois latérales obtenues par soudage d'un film sur lui-même, le taux d'étirage radial est généralement inférieur à 2. Un exemple de ce récipient à paroi fine est illustré figure 8. Ce récipient peut être monocouche ou multicouches. Il peut être réalisés avec une grande variété de résine. A titre d'exemple, cet emballage peut contenir des résines polyester (PET, PEN), des polyoléfines (PE, PP), des résines polyamides, des résines permettant d'améliorer les propriétés barrière (EVOH, PVDC, PAMXD6). Ce récipient peut également contenir des couches métalliques comme par exemple une couche d'aluminium.

Le mode préférentiel de l'invention permet de réaliser un récipient dont l'épaisseur des parois latérales est inférieure à 0,2 mm. La préforme permettant d'obtenir ce récipient a des parois latérales dont l'épaisseur est inférieure à 0,45 mm.

Le mode préférentiel de l'invention est avantageux pour réaliser des emballages soufflés qui ne présentent pas d'axe de symétrie. L'invention permet par exemple de réaliser récipients de section carrée à partir de préformes de section carrée. De même des récipients de section ovale seront réalisés à partir de préforme de section ovale.

Un autre avantage de l'invention est l'intégration de fonction au niveau du goulot ou du fond. L'invention permet par exemple la fabrication d'une préforme comprenant un goulot avec bouchon, le goulot et le bouchon étant reliés par une charnière et ne formant qu'une seule pièce.

La méthode de fabrication des préformes consiste à fabriquer séparément les trois parties de ladite préforme à savoir le goulot, le fond et les parois latérales. Ces trois parties sont assemblées. Selon un mode préférentiel de l'invention, ces parties sont assemblées par soudage ; chacune des parties comportant au moins à l'endroit de l'assemblage une couche en surface permettant l'assemblage par soudage. Les parties peuvent aussi être assemblée par action mécanique (vissage, encliquetage, emboîtement, etc...). La figure 9 montre un exemple d'assemblage par action mécanique. Le goulot 2 et les parois latérales 3 sont emboîtées grâce à une légère déformation élastique lors de l'opération d'assemblage. Une lèvre 9 garantit l'étanchéité de l'assemblage. Afin de faciliter l'assemblage, il est avantageux d'utiliser une résine assez souple pour le goulot. Cette résine est par exemple en polyoléfine (PE ou PP).

Pour un assemblage des pièce par soudage, il est avantageux d'utiliser un goulot et un fond en PE ou en PP ; ledit goulot et ledit fond étant soudés sur les parois latérales comportant au moins une couche en PE ou PP en surface interne. Le goulot et le fond sont avantageusement moulés par injection ou compression. Les parois latérales sont extrudées. Il est avantageux de réaliser les parois latérales à partir d'un film soudé sur lui-même afin de former un corps cylindrique. Le film formant ledit corps cylindrique comprend généralement plusieurs couches.

La méthode de soufflage de la préforme consiste à ne déformer que les parois latérales ; le fond et le goulot n'étant pas déformés. Les jonctions entre les différentes parties de la préforme sont également protégées lors du soufflage de sorte que ces jonctions ne soient pas déformées.

La méthode de soufflage consiste à chauffer les parois latérales de ladite préforme et à former l'emballage par étirage - soufflage de ladite préforme dans un moule.

La méthode de soufflage des préformes selon le mode préférentiel de l'invention comprend éventuellement une phase de chauffage des préformes, ladite phase de chauffage étant fortement réduite compte tenue de la faible épaisseur des parois latérales de la préforme. Seules les parois latérales de la préformes sont chauffées, les jonctions entre les parois latérales et le goulot et le fond ne sont pas chauffées. Les préformes sont ensuite soufflées dans un moule ; seules les parois latérales de ladite préforme se déforment pendant le soufflage. La méthode de soufflage de la préforme selon le mode préférentiel de l'invention consiste à ne pas étirer ladite préforme dans le moule de sorte que la hauteur du récipient produit est équivalente à la hauteur de la préforme. Les parois latérales de ladite préforme sont donc déformées radialement uniquement. Il a été trouvé qu'il était avantageux de souffler ces préforme avec un taux de déformation inférieur à 2. Il a été trouvé également, que du fait de l'épaisseur réduite des parois latérales de ladite préforme, il est possible dans certains cas de ne pas chauffer les parois latérales de la préforme avant soufflage.

## Revendications

1. Préforme (1) pour la confection d'un emballage par soufflage **caractérisé par le fait qu'**elle est au moins composée de trois éléments distincts assemblés l'un à l'autre à savoir une paroi latérale (3), un fond (4), et une partie supérieure (2) comprenant une ouverture.

2. Préforme (1) selon la revendication 1 dont au moins deux éléments sont assemblés par soudage.

3. Préforme (1) selon la revendication 1 ou 2 dont au moins deux éléments sont assemblés par encliquetage.

4. Préforme (1) selon l'une quelconque des revendications précédentes dont au moins 95% de la paroi latérale (3) est flexible et d'épaisseur inférieure à 400 microns.

5. Préforme (1) selon l'une quelconque des revendications précédentes dont l'épaisseur de la partie supérieure (2) est deux fois supérieure à l'épaisseur de la paroi latérale (3).

6. Préforme (1) selon l'une quelconque des revendications précédentes dont la paroi latérale (3) est multicouche.

7. Préforme (1) selon l'une quelconque des revendications précédentes dont le diamètre externe de l'ouverture est inférieur au diamètre externe de la paroi latérale (3).

8. Préforme (1) selon l'une quelconque des revendications précédentes dont la paroi latérale (3) est cylindrique.

9. Préforme (1) selon l'une quelconque des revendications précédentes dont la paroi latérale (3) est de section ovale.

10. Préforme (1) selon l'une quelconque des revendications 1 à 7 dont la paroi latérale (3) est de section polygonale.

11. Méthode de soufflage d'une préforme (1) comprenant au moins trois éléments distincts soudés l'un à l'autre, à savoir à savoir une paroi latérale (3), un fond (4) et une partie supérieure (2) comprenant une ouverture ; méthode consistant à déformer par soufflage ladite préforme dans la cavité d'un moule ; méthode **caractérisée par le fait que** seule la paroi latérale (3) est déformée par soufflage, **par le fait que** le taux d'étirage axial de la préforme est inférieur à 1,1 et **par le fait que** le taux d'étirage radial de la préforme est inférieur à 5.

12. Méthode selon la revendication 11 consistant à ne pas déformer la paroi latérale (3) au niveau de la jonction avec le fond et la partie supérieure.

13. Méthode selon la revendication 11 ou 12 consistant à souffler ladite préforme (1) à température ambiante dans la cavité du moule.

14. Méthode selon l'une quelconque des revendications 11 à 13 consistant à chauffer uniquement la paroi latérale (3) de ladite préforme (1) avant soufflage.

15. Méthode selon l'une quelconque des revendications 11 à 14 consistant à bloquer axialement le fond (4) et la partie supérieure (2) pendant le soufflage afin d'éviter un allongement de ladite préforme (1).

16. Emballage obtenu par soufflage d'une préforme (1) selon l'une quelconque des revendications 1 à 10 **caractérisé par le fait que** sa paroi latérale comporte au moins deux parties cylindriques, une première étant située à la jonction entre la paroi flexible et le fond et la deuxième étant située à la fonction entre la paroi flexible et la partie supérieure ; **par le fait que** le diamètre desdites partie cylindriques est identique ; et **par le fait que** le rapport entre le diamètre maximal et le diamètre au niveau des jonctions est inférieur à 5.
